# FASCICULE DE BREVET EUROPEEN

(11) **EP 3 660 295 B1**
(45) Date de publication et mention de la délivrance du brevet: **13.01.2021**
(21) Numéro de dépôt: 19207964.8
(22) Date de dépôt: 08.11.2019
(51) Int. Cl.: F02C 7/045, B64D 33/02, F02K 1/82, F02C 7/24, G10K 11/168, G10K 11/172

(54) **PROCÉDÉ DE FABRICATION D'UN ÉLÉMENT ACOUSTIQUE D'UNE STRUCTURE D'ABSORPTION ACOUSTIQUE À PARTIR D'AU MOINS UNE FEUILLE DE MATIÈRE**
VERFAHREN ZUR HERSTELLUNG EINES AKUSTISCHEN ELEMENTES EINER AKUSTISCHEN ABSORPTIONSSTRUKTUR AUS MINDESTENS EINER MATERIALBLATT
PROCESS FOR PRODUCING AN ACOUSTIC ELEMENT OF AN ACOUSTIC ABSORPTION STRUCTURE FROM AT LEAST ONE SHEET OF MATERIAL

(30) Priorité: 28.11.2018 FR 1871984
(43) Date de publication de la demande: 03.06.2020
(73) Titulaire: AIRBUS OPERATIONS (S.A.S.), 31060 Toulouse (FR)
(72) Inventeur: BROCHARD, Wolfgang, 31060 TOULOUSE Cedex 9 (FR); MAFFRE, Claire, 31060 TOULOUSE Cedex 9 (FR); CAZEAUX, Laurent, 31060 TOULOUSE Cedex 9 (FR)
(74) Mandataire: Gicquel, Olivier Yves Gérard

(56) Documents cités:
- FR-A1- 3 055 662
- DATABASE WPI Week 201845 Thomson Scientific, London, GB; AN 2018-51480A XP002793287, & RU 179 829 U1 (ANOSHKIN A N) 25 mai 2018 (2018-05-25)

## Description

[La présente demande se rapporte à un procédé de fabrication d'un élément acoustique d'une structure d'absorption acoustique à partir d'une feuille de matière, à un élément acoustique d'une structure d'absorption acoustique obtenu à partir dudit procédé, à une structure d'absorption acoustique comprenant au moins un tel élément acoustique ainsi qu'à un ensemble propulsif comportant une telle structure d'absorption acoustique.

Selon un mode de réalisation de l'art antérieur, un ensemble propulsif comprend une nacelle ainsi qu'une turbomachine double flux, positionnée à l'intérieur de la nacelle. Certaines surfaces de la nacelle et de la turbomachine comprennent des structures d'absorption acoustique pour atténuer les nuisances sonores. Selon un mode de réalisation, une structure d'absorption acoustique comprend une couche poreuse, une couche alvéolaire en nid d'abeilles et une couche réflectrice.

Une turbomachine à haut taux de dilution dit UHBR (pour Ultra Hight Bypass Ratio en anglais) présente une soufflante tournant à des fréquences plus basses que certaines turbomachines actuellement sur le marché si bien que les structures d'absorption acoustique doivent être configurées pour atténuer des ondes sonores à basses fréquences. Pour atténuer de telles ondes sonores, la couche alvéolaire en nid d'abeilles doit avoir une hauteur importante, ce qui est pénalisant en terme de masse, d'encombrement et de fabrication.

Une structure d'absorption acoustique permettant d'absorber des ondes sonores à basses fréquences est décrite dans le document « aero-acoustic liner applications of the broadband spécial acoustic absorber concept, American Institute of Aeronautics and Astronautics, AIAA 2013-2176, 19th AIAA/CEAS Aeroacoustics Conférence May 27-29, 2013, Berlin, Germany ». Elle comprend une pluralité de capsules fermées par une peau en contact avec le milieu dans lequel se propagent les ondes sonores de sorte à délimiter chacune une cavité dans laquelle est positionné un cône creux, distant de la capsule, qui présente une base débouchant au niveau de la peau. Chaque cône comprend au moins un orifice acoustique, permettant de faire communiquer l'intérieur du cône avec l'espace entre le cône et la capsule, positionné et dimensionné en fonction des caractéristiques acoustiques recherchées. En complément, la peau est poreuse au moins au droit de chaque cône.

Une structure d'absorption acoustique ainsi formée, basée sur le même principe qu'un résonateur de Helmholtz et qu'un résonateur quart d'onde, permet d'atténuer efficacement les sons basses fréquences émis par une turbomachine de type UHBR. Une telle structure d'absorption acoustique est par exemple décrite dans le document FR3055662 A1.

Selon un mode de réalisation, les capsules et les cônes sont réalisés, par moulage, en résine chargée de fibres courtes ou sans fibre. Ce mode de réalisation n'est pas pleinement satisfaisant sur le plan des caractéristiques mécaniques et de la masse.

La présente invention vise à remédier à tout ou partie des inconvénients de l'art antérieur.

A cet effet, l'invention a pour objet un procédé de fabrication d'un élément acoustique d'une structure d'absorption acoustique comprenant au moins une enceinte présentant une forme cylindrique, conique ou tronconique, caractérisé en ce que le procédé comprend une étape de découpe d'au moins une préforme dans une plaque ou une feuille de matière, une étape de mise en forme de la préforme par roulage et une étape d'assemblage de deux bords latéraux de la préforme pour obtenir la forme cylindrique, conique ou tronconique de l'enceinte.

Le procédé de fabrication de l'invention permet d'obtenir des enceintes avec de faibles épaisseurs ce qui permet de réduire la masse embarquée. Selon un autre avantage, il peut être mis en œuvre en utilisant des plaques ou des feuilles avec des matériaux divers si bien que les éléments acoustiques peuvent être réalisés en des matériaux adaptés à leurs environnements.

Selon une autre caractéristique, le procédé de fabrication comprend une étape de découpe d'au moins une série de fentes dans la préforme à plat, avant l'étape de mise en forme de ladite préforme.

Selon une autre caractéristique, les fentes sont approximativement positionnées dans des plans contenant l'axe d'enroulement de la préforme lorsque ladite préforme est mise en forme et s'étendent à partir d'un bord courbe de la préforme.

Selon une autre caractéristique, les fentes s'étendent à partir d'un bord courbe concave de la préforme et délimitent des premières languettes. En complément, le procédé de fabrication comprend une étape de pliage des premières languettes, après les étapes de mise en forme et d'assemblage de la préforme, et une étape de jonction des premières languettes de manière à obtenir une paroi de fond pour l'enceinte.

Selon une autre caractéristique, la préforme comprend une première série de premières fentes qui s'étendent à partir d'un bord courbe convexe de la préforme.

Selon une autre caractéristique, la préforme comprend une deuxième série de deuxièmes fentes qui s'étendent à partir d'un bord courbe convexe de la préforme de manière à délimiter des deuxièmes languettes. En complément, le procédé de fabrication comprend une étape de découpe, de mise en forme et d'assemblage de la préforme de manière à obtenir une première enceinte, une étape de positionnement de la première enceinte dans une deuxième enceinte comportant une deuxième paroi latérale qui présente un premier bord et une étape de pliage des deuxièmes languettes, autour du premier bord de la deuxième paroi latérale, pour les plaquer contre une face extérieure de la deuxième paroi de la deuxième enceinte afin d'obtenir un assemblage des première et deuxième enceintes.

Selon une autre caractéristique, le procédé de fabrication comprend une étape d'obtention d'au moins un trou dans la préforme à plat, avant l'étape de mise en forme de ladite préforme.

Selon une autre caractéristique, les trous sont réalisés au niveau des extrémités des fentes distantes d'un bord de la préforme.

Selon une autre caractéristique, le procédé de fabrication comprend une étape de découpe et de mise en forme d'une préforme de fond, de manière à obtenir une forme en cuvette, ainsi qu'une étape d'assemblage de la préforme de fond avec la forme cylindrique ou tronconique de l'enceinte de manière à obtenir une enceinte avec une paroi de fond.

Selon une autre caractéristique, la préforme comprend des premier et deuxième bords latéraux qui présentent chacun plusieurs segments non alignés, configurés pour obtenir, après l'étape de mise en forme et d'assemblage, une paroi latérale comportant plusieurs formes tronconiques superposées.

L'invention a également pour objet un élément acoustique d'une structure d'absorption acoustique obtenu à partir du procédé de fabrication selon l'une des caractéristiques précédentes.

Selon une autre caractéristique, l'élément acoustique d'une structure d'absorption acoustique comprend une première enceinte présentant au moins une première paroi latérale, qui s'étend entre des premier et deuxième bords, obtenue à partir d'une première préforme découpée à plat, mise en forme et assemblée ainsi qu'une deuxième enceinte présentant au moins une deuxième paroi latérale, qui s'étend entre des premier et deuxième bords, obtenue à partir d'une deuxième préforme découpée, mise en forme et assemblée, les première et deuxième enceintes étant reliées au niveau des premiers bords des première et deuxième parois latérales.

Selon un mode de réalisation, la deuxième enceinte comprend une deuxième paroi de fond formée par des languettes de la deuxième préforme pliées et reliées entre elles au niveau d'une zone de jonction.

Selon une configuration, les languettes sont délimitées par des fentes et pliées selon des lignes de pliage, les fentes présentant des trous positionnés au niveau des lignes de pliage des languettes.

Selon un autre mode de réalisation, la deuxième enceinte comprend une forme en cuvette qui présente un fond ainsi qu'un bord périphérique recourbé et relié au deuxième bord de la deuxième paroi latérale.

Selon une configuration, le bord périphérique recourbé comprend plusieurs languettes délimitées par des fentes et pliées selon des lignes de pliage, les fentes présentant des trous positionnés au niveau des lignes de pliage des languettes.

Selon un mode de réalisation, les première et deuxième enceintes sont reliées par une zone de jonction de contact, continue ou discontinue sur le pourtour des première et deuxième enceintes, qui jouxte les premiers bords, qui s'étend sur toute la périphérie des premiers bords et sur une hauteur donnée.

Selon un autre mode de réalisation, la première enceinte comprend une pluralité de languettes, au niveau du premier bord de la première paroi latérale, repliées autour du premier bord de la deuxième paroi latérale pour obtenir une liaison entre les première et deuxième enceintes.

Selon une autre caractéristique, la première paroi latérale comprend des fentes qui s'étendent à partir de son premier bord.

Selon une configuration, les fentes ont une longueur supérieure à la hauteur donnée de la zone de jonction de contact.

Selon une autre caractéristique, l'élément acoustique comprend une troisième enceinte, positionnée entre les première et deuxième enceintes, qui comporte une paroi latérale délimitée par un premier bord, relié à au moins l'une des première et deuxième enceintes, ainsi que par un deuxième bord, opposé au premier bord, qui délimite un bord d'un orifice acoustique.

L'invention a également pour objet une structure d'absorption acoustique comprenant au moins un élément acoustique selon l'une des caractéristiques précédentes ainsi qu'un ensemble propulsif d'aéronef comprenant au moins une telle structure d'absorption acoustique.

D'autres caractéristiques et avantages ressortiront de la description de l'invention qui va suivre, description donnée à titre d'exemple uniquement, en regard des dessins annexés parmi lesquels :
[Fig. 1] est une vue latérale d'un aéronef,
[Fig. 2] est une coupe longitudinale d'un dispositif d'inversion de poussée d'un ensemble propulsif d'aéronef comprenant au moins une structure d'absorption acoustique qui illustre une application de l'invention,
[Fig. 3] est une coupe en perspective d'une structure d'absorption acoustique qui illustre un mode d'intégration de l'invention dans un panneau acoustique,
[Fig. 4] est une représentation schématique montrant les différentes étapes d'un procédé de fabrication d'un élément acoustique d'une structure d'absorption acoustique qui illustre un premier mode de réalisation de l'invention,
[Fig. 5] est une coupe en perspective d'une partie supérieure d'un élément acoustique obtenu conformément au premier mode de réalisation visible sur la figure 4,
[Fig. 6] est une coupe en perspective d'une partie inférieure d'un élément acoustique obtenu conformément au premier mode de réalisation visible sur la figure 4,
[Fig. 7] est une représentation schématique montrant les différentes étapes d'un procédé de fabrication d'une enceinte d'un élément acoustique d'une structure d'absorption acoustique qui illustre un deuxième mode de réalisation de l'invention,
[Fig. 8] est une vue en perspective d'une partie d'une préforme utilisée pour la mise en œuvre du deuxième mode de réalisation visible sur la figure 7,
[Fig. 9] est une coupe schématique d'une partie inférieure de l'élément acoustique visible sur la figure 7 qui illustre une première variante de l'invention,
[Fig. 10] est une coupe schématique d'une partie inférieure de l'élément acoustique visible sur la figure 7 qui illustre une deuxième variante de l'invention,
[Fig. 11] est une représentation schématique montrant les différentes étapes d'un procédé de fabrication d'une enceinte d'un élément acoustique d'une structure d'absorption acoustique qui illustre un troisième mode de réalisation de l'invention,
[Fig. 12] est une représentation schématique montrant les différentes étapes d'un procédé de fabrication d'une enceinte d'un élément acoustique d'une structure d'absorption acoustique qui illustre un quatrième mode de réalisation de l'invention,
[Fig. 13] est une représentation schématique montrant les différentes étapes d'un procédé de fabrication d'une enceinte d'un élément acoustique d'une structure d'absorption acoustique qui illustre un cinquième mode de réalisation de l'invention,
[Fig. 14] est une coupe d'une partie supérieure d'un élément acoustique comprenant une enceinte réalisée conformément au cinquième mode de réalisation visible sur la figure 13,
[Fig. 15] est une représentation schématique montrant les différentes étapes d'un procédé de fabrication d'une partie inférieure d'une enceinte d'un élément acoustique d'une structure d'absorption acoustique qui illustre un mode de réalisation de l'invention,
[Fig. 16] est une vue en perspective d'un élément acoustique qui illustre un autre mode de réalisation de l'invention,
[Figure 17] est une vue en perspective d'une partie inférieure de l'élément acoustique visible sur la figure 16,
[Fig. 18] est une vue de dessus de l'élément acoustique visible sur la figure 16,
[Fig. 19] est une vue en perspective d'un élément acoustique qui illustre un autre mode de réalisation de l'invention,
[Fig. 20] est une représentation schématique montrant les différentes étapes d'un procédé de fabrication d'un élément acoustique d'une structure d'absorption acoustique qui illustre un autre mode de réalisation de l'invention,
[Fig. 21] est une représentation schématique montrant les différentes étapes d'un procédé de fabrication d'une enceinte d'un élément acoustique qui illustre un autre mode de réalisation de l'invention,
[Fig. 22] est une vue en perspective en éclaté des différents éléments d'une structure d'absorption acoustique qui illustre un autre mode de réalisation de l'invention,
[Fig. 23] est une vue en perspective d'une partie d'une structure d'absorption acoustique obtenue à partir des éléments visibles sur la figure 22,
[Fig. 24] est une coupe transversale de la structure d'absorption acoustique visible sur la figure 23,
[Fig. 25] est une représentation schématique montrant les différentes étapes d'un procédé de fabrication d'un élément acoustique d'une structure d'absorption acoustique qui illustre un autre mode de réalisation de l'invention,
[Fig. 26] est une représentation schématique montrant les différentes étapes d'un procédé de fabrication d'un élément acoustique d'une structure d'absorption acoustique qui illustre un autre mode de réalisation de l'invention.

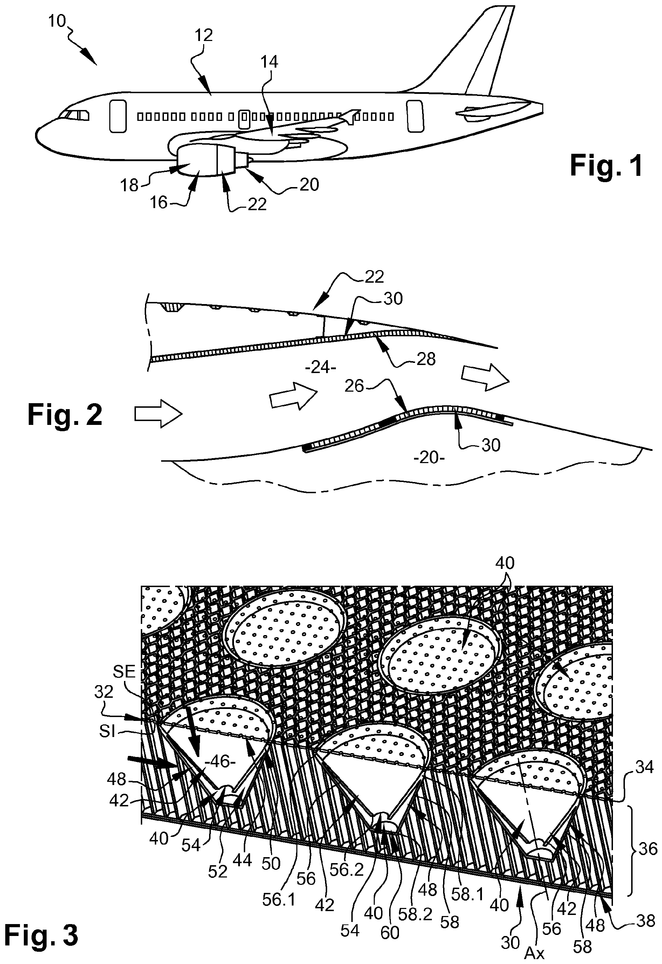

Sur la figure 1, on a représenté un aéronef 10 qui présente un fuselage 12, deux ailes 14, disposées de part et d'autre du fuselage 12, et des ensembles propulsifs 16 fixés sous les ailes 14. Chaque ensemble propulsif 16 comprend une nacelle 18 et une turbomachine 20 positionnée à l'intérieur de la nacelle 18. L'ensemble propulsif 16 comprend à l'arrière un dispositif d'inversion de poussée 22.

Selon un mode de réalisation visible sur la figure 2, l'ensemble propulsif 16 comprend un conduit d'éjection secondaire 24, canalisant un flux d'air secondaire, qui est délimité, au niveau du dispositif d'inversion de poussé 22, par une paroi intérieure 26 (également appelée IFS pour inner fixed structure en anglais) et par une paroi extérieure 28 (également appelée OFS pour outer fixed structure en anglais).

Selon une configuration, la paroi intérieure 26 ou la paroi extérieure 28 comprend une structure d'absorption acoustique 30 (également appelée panneau acoustique) positionnée au niveau d'une peau 32 qui délimite le conduit secondaire 24 et qui présente une surface extérieure SE, en contact avec le flux d'air secondaire, et une surface intérieure SI, opposée à la surface extérieure SE.

Bien que décrite appliquée à un conduit d'éjection secondaire 24, l'invention n'est pas limitée à cette application. Ainsi, la structure d'absorption acoustique 30 peut être positionnée au niveau de toute peau 32 qui présente une surface extérieure SE en contact avec un milieu dans lequel se propagent en fonctionnement des ondes sonores et une surface intérieure SI opposée à la surface SE, comme par exemple une lèvre et un conduit d'une entrée d'air d'une nacelle d'aéronef, un carter de soufflante d'une nacelle d'aéronef ou tout autre surface de l'ensemble propulsif 16. Quelle que soit la configuration, l'ensemble propulsif 16 comprend au moins une structure d'absorption acoustique 30.

Selon un mode de réalisation visible sur la figure 3, la structure d'absorption acoustique 30 comprend, de la surface extérieure SE vers la surface intérieure SI une couche poreuse 34 dont une face forme la surface extérieure SE, au moins une couche alvéolaire 36, une couche réflectrice 38 et une pluralité d'éléments acoustiques 40, positionnés dans la couche alvéolaire 36, qui présentent chacun au moins une cavité obturée par la couche poreuse 34. Selon une configuration, la couche alvéolaire 36 est une structure en nid d'abeilles qui présente des empreintes pour loger les éléments acoustiques 40.

Selon un autre mode de réalisation, la structure d'absorption acoustique 30 comprend une peau 32, dont une première face forme la surface extérieure SE et dont une seconde face forme la surface intérieure SI, ainsi qu'une pluralité d'éléments acoustiques 40, positionnés contre la surface intérieure SI de la peau 32, qui présentent chacun au moins une cavité obturée par la peau 32, cette dernière étant au moins poreuse au droit de chaque élément acoustique 40.

Quel que soit le mode de réalisation, la structure d'absorption acoustique 30 comprend au moins un élément acoustique 40.

Selon un mode de réalisation visible sur la figure 3, un élément acoustique 40 comprend :
- une première enceinte 42, également appelée cône, qui présente une première embouchure 44 délimitée par un bord plaqué contre la surface intérieure SI de la peau 32 de sorte que la première enceinte 42 et la peau 32 délimitent une première cavité 46,
- une deuxième enceinte 48, également appelée capsule, dans laquelle est positionnée la première enceinte 42, au moins partiellement espacée de la première enceinte 42, qui présente une deuxième embouchure 50 délimitée par un bord plaqué contre la première enceinte 42 (ou éventuellement la surface intérieure SI de la peau 32) de sorte que la deuxième enceinte 48 et la première enceinte 42 (et éventuellement la peau 32) délimitent une deuxième cavité 52,
- au moins un orifice acoustique 54 traversant la première enceinte 42 pour faire communiquer les première et deuxième cavités 46, 52.

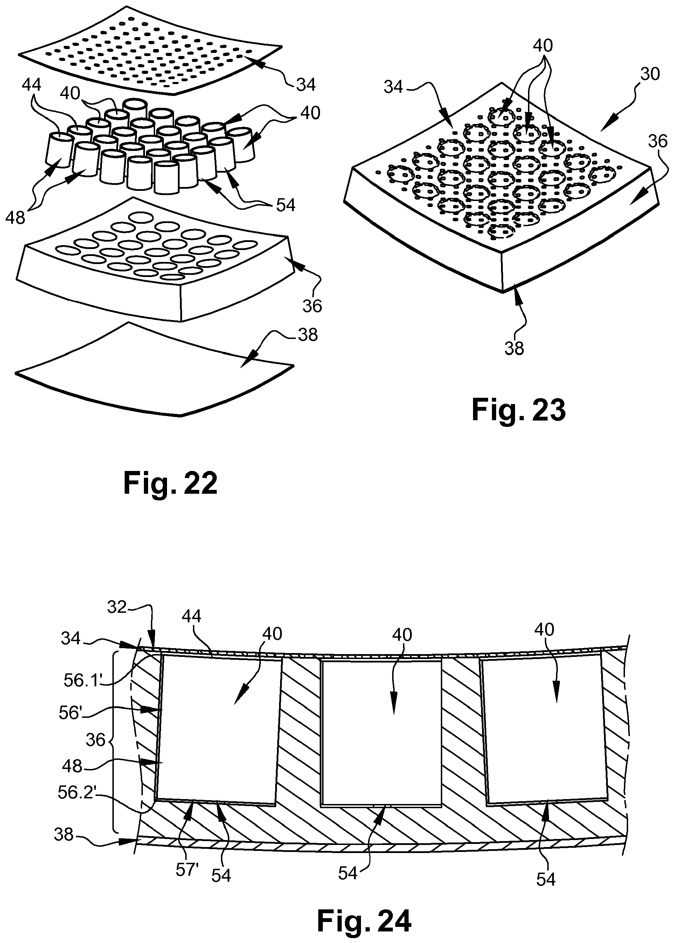

Selon un autre mode de réalisation visible sur les figures 22 à 24, un élément acoustique 40 comprend une première enceinte 42 qui présente une première embouchure 44, plaquée contre la peau formant la couche poreuse 34 de sorte que la première enceinte 42 et la couche poreuse 34 délimitent une première cavité 46, ainsi qu'au moins un orifice acoustique 54 traversant la première enceinte 42 pour faire communiquer la première cavité 46 avec au moins une cavité d'une cellule de la couche alvéolaire 36. Selon ce mode de réalisation, l'élément acoustique 40 comprend une unique enceinte 42.

Selon un agencement visible sur les figures 3 et 23, les éléments acoustiques 40 sont agencés selon plusieurs lignes et plusieurs colonnes. D'autres agencements pourraient être envisagés.

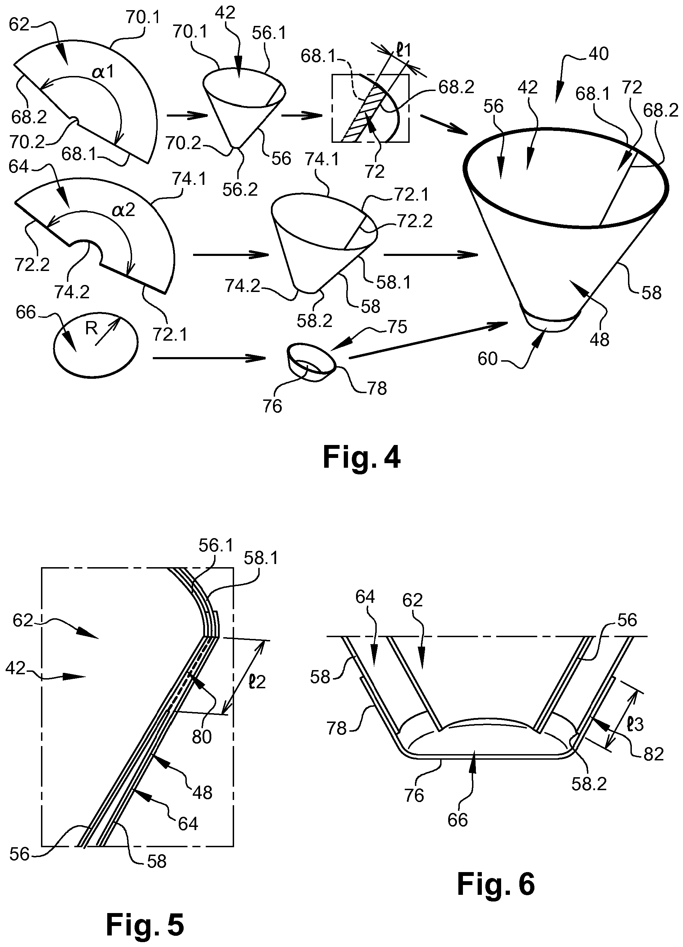

Selon un mode de réalisation visible sur les figures 3 et 4 par exemple, la première enceinte 42 est tronconique et comprend une première paroi latérale 56, délimitée par un premier bord 56.1, orienté vers la peau 32 et formant la première embouchure 44, ainsi que par un deuxième bord 56.2, opposé au premier bord 56.1, qui délimite le bord de l'orifice acoustique 54.

Selon une autre configuration non représentée, la première enceinte 42 est tronconique et comprend, en plus de la première paroi latérale 56 tronconique, une première paroi de fond positionnée au niveau du deuxième bord 56.2 de la première paroi latérale 56 de sorte à fermer la première cavité 46. Selon cette configuration, le (ou les) orifice(s) acoustique(s) 54 est (ou sont) positionné(s) sur la première paroi latérale 56 et/ou sur la première paroi de fond.

Selon un autre mode de réalisation non représenté, la première enceinte 42 est conique et comprend une première paroi latérale conique délimitée par un premier bord, orienté vers la peau 32 et formant la première embouchure, ainsi que par un sommet fermé.

Selon un autre mode de réalisation visible sur les figures 22 à 24, la première enceinte 42 est tubulaire et comprend une première paroi latérale 56' cylindrique, délimitée par un premier bord 56.1', orienté vers la peau 32 et formant la première embouchure 44, ainsi que par un deuxième bord 56.2'. En plus de la première paroi latérale 56' cylindrique, la première enceinte 42 peut comprendre une première paroi de fond 57'. Le (ou les) orifice(s) acoustique(s) 54 est (ou sont) positionné(s) sur la première paroi latérale 56' et/ou sur la première paroi de fond 57'.

Selon un mode de réalisation visible sur les figures 3 et 4 par exemple, la deuxième enceinte 48 est tronconique et comprend une deuxième paroi latérale 58, délimitée par un premier bord 58.1, orienté vers la peau 32 et formant la deuxième embouchure 50, et par un deuxième bord 58.2 opposé au premier bord 58.1, ainsi qu'une deuxième paroi de fond 60 positionnée au niveau du deuxième bord 58.2 de la deuxième paroi latérale 58 de sorte à fermer la deuxième cavité 52.

Selon une autre configuration non représentée, la deuxième enceinte 48 est conique et comprend une première paroi latérale conique délimitée par un premier bord, orienté vers la peau 32 et formant la première embouchure, ainsi que par un sommet fermé.

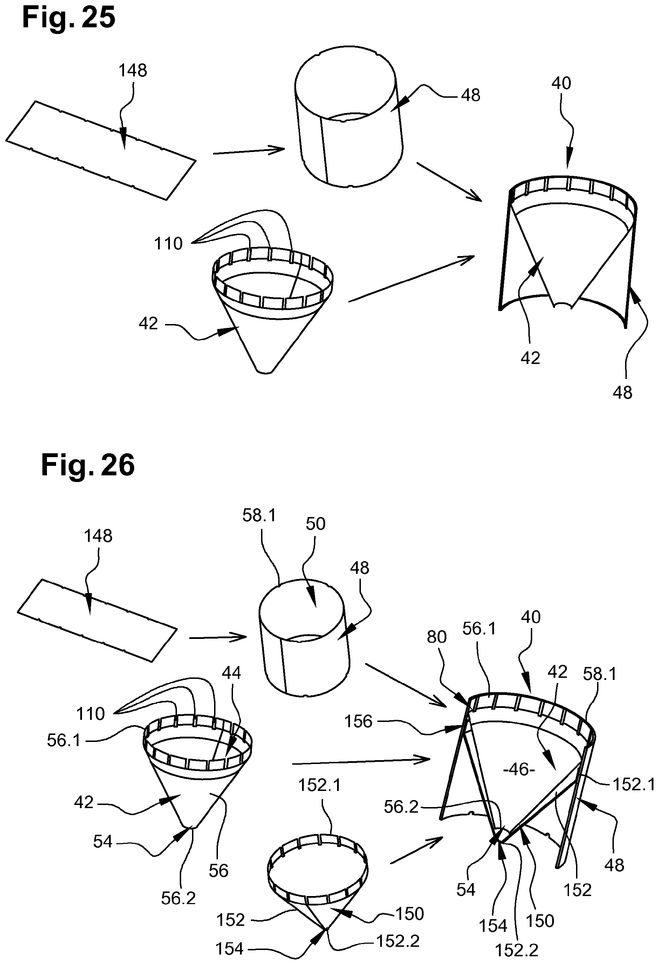

Selon un autre mode de réalisation, la deuxième enceinte 48 est tubulaire et comprend une deuxième paroi latérale cylindrique, délimitée par un premier bord, orienté vers la peau et formant la deuxième embouchure, et par un deuxième bord ainsi qu'une deuxième paroi de fond pour fermer la deuxième cavité 52. Selon un autre mode de réalisation visible sur les figures 25 et 26, la deuxième enceinte 48 est tubulaire et comprend une deuxième paroi latérale cylindrique délimitée par un premier bord orienté vers la peau et formant la deuxième embouchure, et par un deuxième bord. Selon ce mode de réalisation, la deuxième enceinte 48 ne comprend pas de fond. Elle peut être obtenue à partir d'une préforme rectangulaire 148 enroulée de manière à former un tube.

Selon une configuration visible sur la figure 3, la première enceinte 42 est approximativement centrée dans la deuxième enceinte 48 si bien que les première et deuxième parois 56, 58 sont coaxiales et présentent un même axe de révolution Ax.

Bien entendu, l'invention n'est pas limitée aux agencements visibles sur les figures 3 et 23 pour les éléments acoustiques 40 et/ou à ces géométries et configurations pour les première et deuxième enceintes 42 et 48.

Selon un mode de réalisation visible sur la figure 4, l'élément acoustique 40 comprend des première et deuxième enceintes 42, 48, la première enceinte 42 comportant une première paroi latérale 56 obtenue à partir d'une première préforme 62 plane mise en forme, une deuxième enceinte 48 comportant une deuxième paroi latérale 58 obtenue à partir d'une deuxième préforme 64 plane mise en forme ainsi qu'une deuxième paroi de fond 60 obtenue à partir d'une troisième préforme, appelée préforme de fond, 66 plane mise en forme.

La première préforme 62 est découpée dans une plaque ou une feuille et présente des premier et deuxième bords latéraux 68.1, 68.2 rectilignes, formant un angle α1, un premier bord courbe 70.1 convexe, reliant les extrémités les plus éloignées des premier et deuxième bords latéraux 68.1, 68.2, et un deuxième bord courbe 70.2 concave reliant les extrémités les plus proches des premier et deuxième bords latéraux 68.1, 68.2.

Pour la suite de la description, une plaque ou une feuille est un élément qui est plan et mince par rapport aux autres dimensions.

En suivant, la première préforme 62 est mise en forme, par roulage par exemple, de manière à relier les premier et deuxième bords latéraux 68.1, 68.2, au niveau d'une zone de jonction 72, pour obtenir la forme tronconique de la première paroi latérale 56 de la première enceinte 42. Selon une configuration, les premier et deuxième bords latéraux 68.1, 68.2 sont chevauchants, sur toute leur longueur, sur la zone de jonction 72 qui a une largeur l1 comprise entre 2 et 10 mm en fonction de la géométrie de la première préforme 62. La jonction entre les premier et deuxième bords latéraux 68.1, 68.2 est réalisée par collage, par soudage, par brasage ou tout autre procédé d'assemblage.

L'angle α1 de la première préforme est déterminé en fonction de l'angle solide souhaité pour la première paroi latérale 52 et de la zone de jonction 72. Les rayons de courbure des premier et deuxième bords courbes 70.1, 70.2 sont déterminés de manière à ce que, après la jonction des premier et deuxième bords latéraux 68.1, 68.2, le premier bord courbe 70.1 convexe soit disposé dans un plan et forme le premier bord 56.1 de la première paroi latérale 56 et que le deuxième bord courbe 70.2 concave soit disposé dans un plan et forme le deuxième bord 56.2 de la première paroi latérale 56.

La deuxième paroi 58 est obtenue approximativement de la même manière, à partir d'une deuxième préforme 64 découpée dans une plaque ou une feuille. La deuxième préforme 64 présente des premier et deuxième bords latéraux 72.1, 72.2, formant un angle α2, un premier bord courbe 74.1 convexe, reliant les extrémités les plus éloignées des premier et deuxième bords latéraux 72.1, 72.2, et un deuxième bord courbe 74.2 concave reliant les extrémités les plus proches des premier et deuxième bords latéraux 72.1, 72.2. En suivant, la deuxième préforme 64 est mise en forme et les premier et deuxième bords latéraux 72.1, 72.2 sont reliés, comme pour la première préforme 62.

La préforme de fond 66 est découpée dans une plaque ou feuille de manière à obtenir un disque d'un rayon R. En suivant, la préforme de fond 66 est mise en forme (par exemple par thermoformage) de manière à obtenir une forme en cuvette 75 qui présente un fond 76 plat ou bombé, correspondant à la deuxième paroi de fond 60, et un bord périphérique 78 recourbé, configuré pour coopérer avec le deuxième bord 58.2 de la deuxième paroi latérale 58.

Par la suite, les première, deuxième et troisième préformes 62, 64, 66 sont assemblées afin d'obtenir l'élément acoustique 40. Ainsi, la première préforme 62 mise en forme et formant la première paroi latérale 56 est insérée dans la deuxième préforme 64 mise en forme et formant ou thermoformant la deuxième paroi latérale 58 de sorte que les premiers bords 56.1, 58.1 des première et deuxième parois latérales 56, 58 soient coplanaires. En suivant, les première et deuxième parois latérales 56, 58 sont reliées au niveau d'une zone de jonction par contact 80 (visible sur la figure 5) qui jouxte les premiers bords 56.1, 58.1, qui s'étend sur toute la périphérie des premiers bords 56.1, 58.1 et sur une hauteur l2 comprise entre 2 et 10 mm. La zone de jonction par contact 80 entre les première et deuxième parois latérales 56, 58 des première et deuxième enceintes 42, 48 est réalisée par collage, par soudage, par brasage ou tout autre procédé d'assemblage. La zone de jonction par contact 80 peut être continue ou discontinue (sur la circonférence des première et deuxième enceintes 42, 48) en fonction du procédé de fabrication utilisé.

La forme en cuvette 75 formée à partir de la troisième préforme 66 est positionnée de sorte que son bord périphérique 78 recourbé recouvre le deuxième bord 58.2 de la deuxième paroi latérale 58. En suivant, les deuxième et troisième préforme 64, 66 sont reliées au niveau d'une zone de jonction 82 (visible sur la figure 6) qui s'étend sur toute la périphérie du deuxième bord 58.2 de la deuxième paroi latérale 58 et sur une hauteur l3 comprise entre 2 et 10 mm, comme illustré sur la figure 6. La jonction entre les deuxième et troisième préformes 64, 66 est réalisée par collage, par soudage, par brasage ou tout autre procédé d'assemblage.

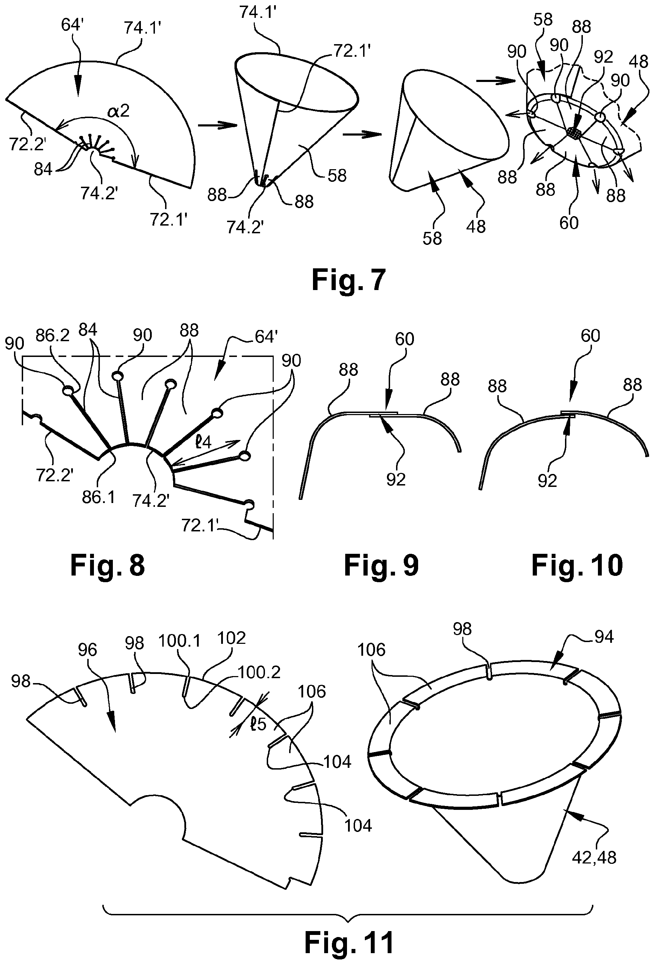

Selon un deuxième mode de réalisation visible sur les figures 7 à 10, la deuxième enceinte 48 est obtenue à partir d'une unique préforme 64' plane mise en forme afin d'obtenir la deuxième paroi latérale 58 et la deuxième paroi de fond 60.

La deuxième préforme 64' est découpée dans une plaque ou une feuille et présente des premier et deuxième bords latéraux 72.1', 72.2', formant un angle α2, un premier bord courbe 74.1' convexe, reliant les extrémités les plus éloignées des premier et deuxième bords latéraux 72.1', 72.2', et un deuxième bord courbe 74.2' concave reliant les extrémités les plus proches des premier et deuxième bords latéraux 72.1', 72.2'.

Selon ce deuxième mode de réalisation, comme illustré en détails sur la figure 8, la deuxième préforme 64' comprend une pluralité de fentes 84 qui s'étendent chacune à partir d'une première extrémité 86.1, positionnée sur le deuxième bord courbe 74.2' concave, jusqu'à une deuxième extrémité 86.2. Les fentes 84 sont régulièrement réparties sur toute la longueur du deuxième bord courbe 74.2'. Chaque fente 84 s'étend selon une direction perpendiculaire à la tangente au deuxième bord courbe 74.2' au niveau de sa première extrémité 86.1. Les fentes 84 ont une longueur l4 (distance entre les première et deuxième extrémités 86.1, 86.2) comprise entre la moitié du rayon du deuxième bord 58.2 de la deuxième paroi 58 et le rayon. Ces fentes 84 délimitent entre elles des languettes 88. A titre d'exemple, la deuxième préforme 64' comprend 4, 6 ou 8 languettes 88.

Selon une configuration, chaque fente 84 comprend un trou 90 au niveau de sa deuxième extrémité 86.2 Les trous 90 ont un diamètre supérieur à la largeur des fentes 84. Ces trous 90 peuvent être circulaires ou non et avoir un diamètre compris entre 0,2 et 3 mm. Les trous 90 permettent de limiter l'apparition d'éventuelles fissures, confèrent une certaine souplesse pour déformer les languettes 88 et peuvent permettre un écoulement de fluide à travers la deuxième enceinte 48 afin d'obtenir une fonction de drainage matérialisée par des flèches sur la figure 7.

Comme précédemment, la deuxième préforme 64' est mise en forme et les premier et deuxième bords latéraux 72.1', 72.2' sont reliés pour obtenir la deuxième paroi latérale 58. En suivant, les languettes 88 sont repliées selon une ligne de pliage et reliées entre elles, au niveau d'une zone de jonction 92 de manière à former la deuxième paroi de fond 60. Selon une première variante visible sur la figure 9, les languettes 88 sont repliées de manière à former une deuxième paroi de fond 60 approximativement plate. Selon une deuxième variante visible sur la figure 10, les languettes 88 sont repliées de manière à former une deuxième paroi de fond 60 bombée. Après le pliage des languettes 88, les trous 90 sont positionnés au niveau des lignes de pliage des languettes 88.

Selon un troisième mode de réalisation visible sur la figure 11, la première et/ou deuxième enceinte 42, 48 comprend une collerette 94. Lorsque la collerette 94 est prévue au niveau de la première enceinte 42, elle est configurée pour être plaquée contre la surface intérieure SI de la peau 32 et assurer la liaison entre la première enceinte 42 et la peau 32. Lorsque la collerette 94 est prévue au niveau de la deuxième enceinte 48, elle est configurée pour être plaquée contre la surface intérieure SI de la peau 32 ou une collerette de la première enceinte 42 et assurer la liaison entre la deuxième enceinte 48 et la peau 32 ou la première enceinte 42.

Selon le troisième mode de réalisation et comme précédemment, la première et/ou deuxième enceinte 42, 48 est obtenue à partir d'une préforme 96 découpée dans une plaque ou feuille sensiblement analogue à la première préforme 64. Cette préforme 96 comprend une pluralité de fentes 98 qui s'étendent chacune à partir d'une première extrémité 100.1, positionnée sur un premier bord courbe 102 convexe de la préforme 96, jusqu'à une deuxième extrémité 100.2. Les fentes 98 sont régulièrement réparties sur toute la longueur du premier bord courbe 102 convexe. Chaque fente 98 s'étend selon une direction perpendiculaire à la tangente au premier bord courbe 102 convexe au niveau de sa première extrémité 100.1. Les fentes ont une longueur l5 en fonction de la largeur de la collerette 94. Chaque fente 98 peut comprendre un trou 104, au niveau de sa deuxième extrémité 100.2, qui a un diamètre supérieur à la largeur de la fente 98. Ces trous 104 peuvent être circulaires ou non et avoir un diamètre compris entre 0,2 et 3 mm. Ces fentes 98 délimitent entre elles des languettes 106.

Comme illustré sur la figure 11, la préforme 96 est déformée et assemblée de manière à obtenir une forme conique ou tronconique. En suivant, les languettes 106 sont pliées de manière à former la collerette 94.

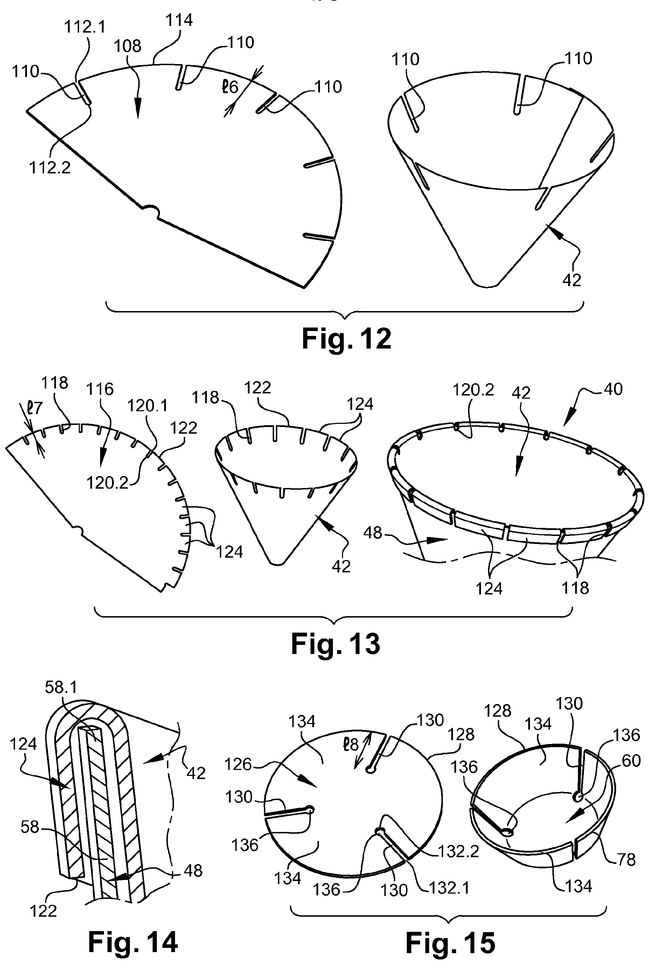

Selon un quatrième mode de réalisation visible sur les figures 12, 25 et 26, la première enceinte 42 est obtenue à partir d'une préforme 108 qui présente un contour sensiblement identique à celui de la préforme 64 du premier mode de réalisation. Cette préforme 108 comprend une pluralité de fentes 110 qui s'étendent chacune à partir d'une première extrémité 112.1, positionnée sur un premier bord courbe 114 convexe de la préforme 108 (qui correspond au premier bord 58.1 de la première paroi latérale 58), jusqu'à une deuxième extrémité 112.2. Les fentes 110 sont régulièrement réparties sur toute la longueur du premier bord courbe 114 convexe. Chaque fente 110 s'étend selon une direction perpendiculaire à la tangente au premier bord courbe 114 convexe au niveau de sa première extrémité 112.1. Ces fentes 110 ont une longueur l6 égale ou légèrement supérieure à la zone de jonction 80 entre les première et deuxième enceintes 42 et 48. Ces fentes 110 peuvent présenter des trous, comme pour le deuxième mode de réalisation. Les fentes 110 confèrent à la partie supérieure de la première enceinte 42 une certaine souplesse permettant d'absorber d'éventuelles déformations lors de la jonction entre les première et deuxième enceintes 42, 48. Ces fentes 110 peuvent également permettre d'élargir la conicité de la partie supérieure de la première enceinte 42.

Selon un cinquième mode de réalisation visible sur les figures 13 et 14, la première enceinte 42 est obtenue à partir d'une préforme 116 qui comprend des fentes 118 qui s'étendent chacune à partir d'une première extrémité 120.1, positionnée sur un premier bord courbe 122 convexe de la préforme 116, jusqu'à une deuxième extrémité 120.2. Les fentes 118 sont régulièrement réparties sur toute la longueur du premier bord courbe 122 convexe. Chaque fente 118 s'étend selon une direction perpendiculaire à la tangente au premier bord courbe 122 convexe au niveau de sa première extrémité 120.1 et présente une longueur l7. Les fentes 118 peuvent présenter des trous, comme pour le deuxième mode de réalisation. Les fentes 118 délimitent entre elles des languettes 124 utilisées pour obtenir une liaison, par pincement ou par sertissage, entre les première et deuxième enceintes 42, 48.

Selon ce cinquième mode de réalisation, la première enceinte 42 est insérée à l'intérieur de la deuxième enceinte 48 jusqu'à ce que les deuxièmes extrémités 120.2 des fentes 118 soient positionnées approximativement au même niveau que le premier bord 58.1 de la deuxième paroi latérale 58 formant la deuxième enceinte 48. En suivant, les languettes 124 sont repliées autour du premier bord 58.1 de la deuxième paroi latérale 58 afin d'être plaquées contre la face extérieure de la deuxième paroi latérale 58, comme illustré sur la figure 14.

Selon un mode de réalisation illustré par la figure 15, la deuxième paroi de fond 60 est obtenue à partir d'une troisième préforme de fond 126 qui présente un bord périphérique 128 circulaire et des fentes 130 radiales qui s'étendent chacune selon une direction radiale, entre une première extrémité 132.1 située au niveau du bord périphérique 128 et une deuxième extrémité 132.2. Ces fentes 130 ont une longueur l8 qui correspond à la hauteur du bord périphérique 78 recourbé de la forme en cuvette 75. Elles délimitent entre elles des languettes 134.

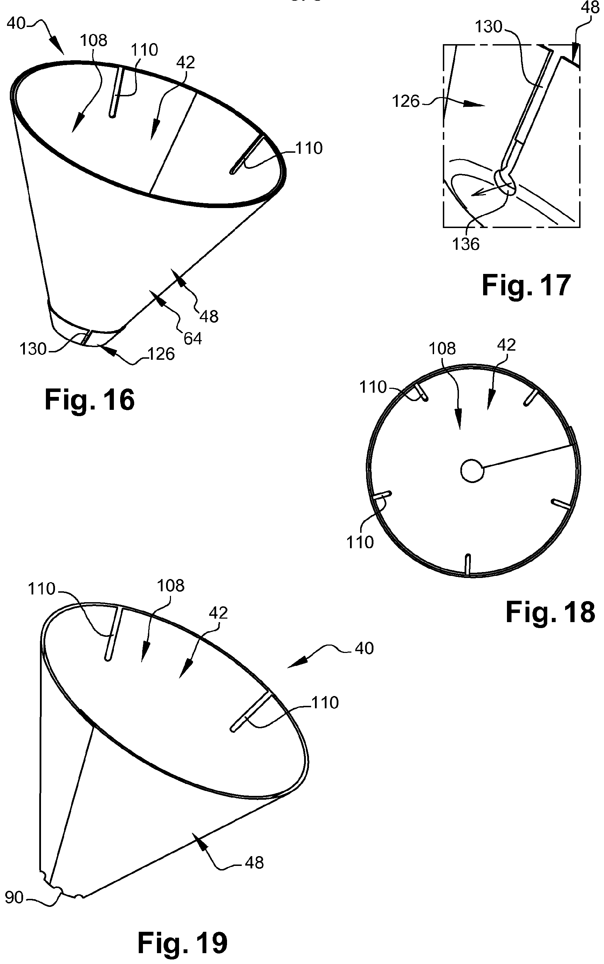

Selon une configuration, chaque fente 130 comprend un trou 136, au niveau de sa deuxième extrémité 132.2, qui a un diamètre supérieur la largeur de la fente 130. Ces trous 136 peuvent être circulaires ou non et avoir un diamètre compris entre 0,2 et 3 mm. Les trous 136 permettent de limiter l'apparition d'éventuelles fissures, confèrent une certaine souplesse pour déformer les languettes 134 et peuvent permettre un écoulement de fluide à travers la deuxième enceinte 48 afin d'obtenir une fonction de drainage matérialisée par des flèches sur la figure 17.

Après avoir été découpée dans une plaque ou une feuille, la troisième préforme de fond 126 est mise en forme en recourbant les languettes 134 selon des lignes de pliage de manière à obtenir la forme en cuvette 75. Après la mise en forme, les trous 136 sont positionnés au niveau des lignes de pliage des languettes 134.

Selon un mode de réalisation illustré par les figures 16, 17 et 18, un élément acoustique 40 comprend :
- une première enceinte 42 obtenue et assemblée à une deuxième enceinte 48, conformément au quatrième mode de réalisation visible sur la figure 12, à partir d'une première préforme 108,
- une deuxième enceinte 48 obtenue à partir d'une deuxième préforme 64, découpée et mise en forme conformément au premier mode de réalisation visible sur figure 4, et d'une troisième préforme de fond 126 découpée et mise en forme conformément au mode de réalisation visible sur la figure 15, les deuxième et troisième préformes 64 et 126 étant assemblées conformément au premier mode de réalisation visible sur la figure 4.

Selon ce mode de réalisation, l'élément acoustique 40 comprend des fentes 110 au niveau de la première paroi latérale 56, qui s'étendent à partir du premier bord 56.1 de la première paroi latérale 56, pour faciliter l'assemblage entre les première et deuxième enceintes 42 et 48, des fentes 130 pour faciliter la mise en forme de la troisième préforme 126 et des trous 136 pour obtenir une fonction de drainage.

Selon un autre mode de réalisation illustré par la figure 19, un élément acoustique 40 comprend :
- une première enceinte 42 obtenue et assemblée à une deuxième enceinte 48, conformément au quatrième mode de réalisation visible sur la figure 12, à partir d'une première préforme 108, et
- une deuxième enceinte 48 obtenue conformément au deuxième mode de réalisation visible sur les figures 7 à 10, à partir d'une deuxième préforme 64'.

Selon ce mode de réalisation, l'élément acoustique 40 comprend des fentes 110 pour faciliter l'assemblage entre les première et deuxième enceintes 42 et 48, et des trous 90 pour obtenir une fonction de drainage.

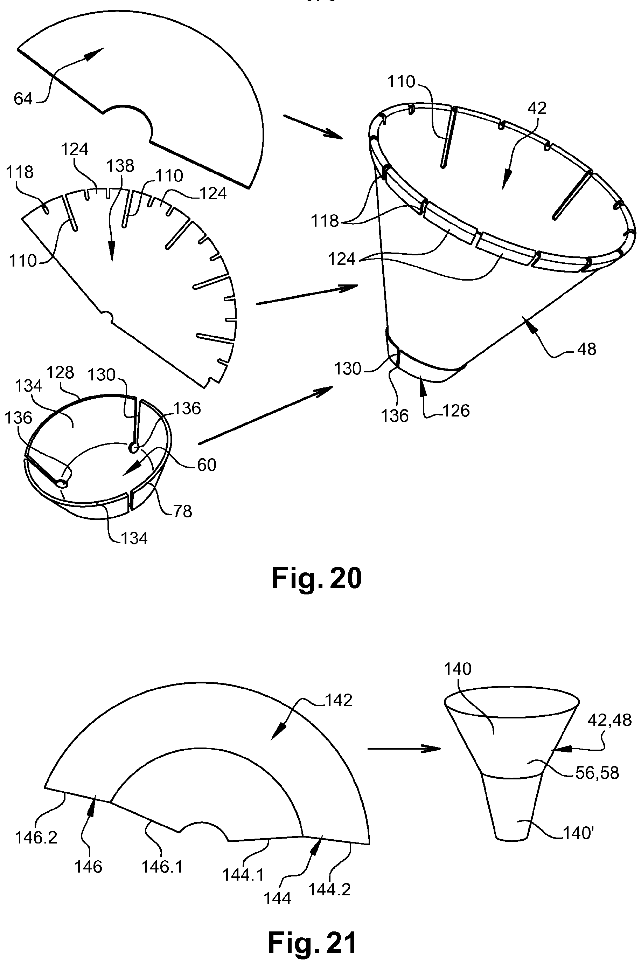

Selon un autre mode de réalisation visible sur la figure 20, un élément acoustique 40 comprend :
- une première enceinte 42 obtenue et assemblée à une deuxième enceinte 48, conformément aux quatrième et cinquième modes de réalisation visibles sur les figures 12 et 13, à partir d'une première préforme 138 qui présente une première série de première fentes 110 permettant d'élargir la conicité de la partie supérieure de la première enceinte 42 et une deuxième série de deuxièmes fentes 118 délimitant, entre elles et avec les première fentes 10, des languettes124 utilisées pour obtenir une liaison entre les première et deuxième enceintes 42, 48, les premières fentes 110 ayant une longueur supérieure à celle des deuxièmes fentes 118,
- une deuxième enceinte 48 obtenue à partir d'une deuxième préforme 64, découpée et mise en forme conformément au premier mode de réalisation visible sur figure 4, et d'une troisième préforme 126 découpée et mise en forme conformément au mode de réalisation visible sur la figure 15, les deuxième et troisième préformes 64 et 126 étant assemblées conformément au premier mode de réalisation visible sur la figure 4.

Selon ce mode de réalisation, l'élément acoustique 40 comprend des fentes 110, au niveau de la première paroi latérale 56, qui s'étendent à partir du premier bord 56.1 de la première paroi latérale 56, pour élargir la conicité de la première enceinte, une pluralité de languettes 124, au niveau du premier bord 56.1 de la première paroi latérale 56, repliées autour du premier bord 58.1 de la deuxième paroi latérale 58 pour obtenir une liaison entre les première et deuxième enceintes 42, 48, des fentes 130 pour faciliter la mise en forme de la troisième préforme 126 et enfin des trous 136 pour obtenir une fonction de drainage.

Selon un autre mode de réalisation visible sur la figure 26, l'élément acoustique 40 comprend :
- une première enceinte 42 tronconique qui présente un orifice acoustique 54 à une première extrémité ainsi qu'une première embouchure 44, à une deuxième extrémité, délimitée par un bord plaqué 56.1 plaqué contre la surface intérieure SI de la peau 32 de sorte que la première enceinte 42 et la peau 32 délimitent une première cavité 46,
- une deuxième enceinte 48 cylindrique, dans laquelle est positionnée la première enceinte 42, au moins partiellement espacée de la première enceinte 42, qui présente une deuxième embouchure 50 délimitée par un bord 58.1 plaqué contre la première enceinte 42 (ou éventuellement la surface intérieure SI de la peau 32).

Selon un mode de réalisation, la première enceinte 42 comprend une première paroi latérale 56, délimitée par un premier bord 56.1, orienté vers la peau 32 et formant la première embouchure 44, ainsi que par un deuxième bord 56.2, opposé au premier bord 56.1, qui délimite le bord de l'orifice acoustique 54. Selon une configuration, la première enceinte 42 est obtenue à partir d'une préforme 108 illustrée sur la figure 12.

Selon un mode de réalisation, la deuxième enceinte 48 est obtenue à partir d'une préforme 148 rectangulaire comme illustré sur la figure 25.

Les première et deuxième enceintes 42, 48 sont reliées au niveau d'une première zone de jonction 80, qui jouxte les bords 56.1, 58.1, obtenue par collage, par soudage, par brasage ou tout autre procédé d'assemblage.

Selon le mode de réalisation visible sur la figure 26, l'élément acoustique 40 comprend une troisième enceinte 150, positionnée entre les première et deuxième enceintes 42, 48, qui comporte une paroi latérale 152, délimitée par un premier bord 152.1, orienté vers la peau 32 et relié à au moins l'une des première et deuxième enceintes 42, 48, ainsi que par un deuxième bord 152.2, opposé au premier bord 152.1, qui délimite un bord d'un orifice acoustique 154.

Selon une configuration, la troisième enceinte 150 est obtenue à partir d'une préforme analogue à la préforme 108 visible sur la figure 12 et son premier bord 152.1 est relié à la deuxième enceinte 48 au niveau d'une deuxième zone de jonction 156 obtenue par collage, par soudage, par brasage ou tout autre procédé d'assemblage. Selon la configuration visible sur la figure 26, la deuxième zone de jonction 156 est décalée par rapport à la première zone de jonction 80. En variante, les première et deuxième zones de jonction 80, 156 pourraient être superposées.

Bien entendu, l'invention n'est pas limitée à ces modes de réalisation pour l'élément acoustique 40 qui peut être obtenu en combinant différents modes de réalisation pour les première, deuxième et troisième préformes.

De plus, au moins l'une des première et deuxième parois latérales 56, 58 des première et deuxième enceintes 42, 48 peut comprendre plusieurs formes tronconiques 140, 140' superposées, comme illustré sur la figure 21. Selon un mode de réalisation, la première ou deuxième enceinte 42, 48 est obtenue à partir d'une préforme 142 qui ne comprend pas des bords latéraux rectilignes mais des premier et deuxième bords latéraux 144, 146 qui présentent chacun plusieurs segments 144.1, 144.2, 146.1, 146.2 non alignés. Pour chaque forme tronconique 140, 140', la préforme 142 comprend un couple de segments formé par un premier segment 144.1, 144.2 du premier bord latéral 144 et par un deuxième segment 146.1, 146.2 du deuxième bord latéral 146. Pour chaque couple, les premier et deuxième segments forment un angle déterminé en fonction de l'angle solide de la forme tronconique 140, 140'.

Les première et deuxième parois latérales 56, 58 des première et deuxième enceintes 42, 48 ne sont pas nécessairement coniques ou tronconiques. Selon un mode de réalisation visible sur les figures 22 à 24, l'élément acoustique 40 comprend une paroi latérale cylindrique qui est obtenue à partir d'une préforme plane rectangle, mise en forme en cylindre, et éventuellement une paroi de fond qui est obtenue à partir d'une préforme plane mise en forme.

Quel que soit le mode de réalisation, l'élément acoustique 40 comprend au moins une enceinte 42, 48 qui présente au moins une paroi 56, 56', 58, 60 obtenue à partir d'une préforme plane mise en forme.

Les différentes préformes sont découpés dans des plaques ou feuilles métalliques ou en matériau composite. Dans le cas d'un matériau composite, la feuille a une épaisseur comprise entre 0,3 et 0,8 mm.

Le procédé de fabrication selon l'invention permet d'utiliser un matériau composite comportant des fibres longues noyées dans une matrice de résine, thermoplastique par exemple. Contrairement aux fibres courtes, les fibres longues confèrent de meilleures caractéristiques mécaniques, notamment sur le plan de la reprise des efforts. Le procédé de fabrication selon l'invention permet également d'utiliser des métaux ayant des caractéristiques mécaniques élevées, à des températures élevées comme celles d'une tuyère d'une turbomachine, comme le titane ou les super-alliages (commercialisés sous la marque Inconel® par exemple), qui sont difficiles à mettre en forme par des techniques de formage.

Quel que soit le matériau, le procédé de fabrication d'une enceinte 42, 48 comprend une étape de découpe d'une préforme dans une plaque ou une feuille de matière, une étape de roulage de la préforme selon un axe d'enroulement Ax, afin d'obtenir une forme cylindrique, conique ou tronconique et une étape d'assemblage de manière à relier deux bords latéraux de la préforme pour conserver la forme cylindrique, conique ou tronconique.

En fonction des matériaux, l'étape de découpe peut être réalisée par une découpe laser, au jet d'eau, par emboutissage ou par toute autre technique de découpe.

Pour l'étape de roulage, la préforme peut être roulée sur un mandrin pour être mise en forme.

En fonction des matériaux, l'étape d'assemblage peut être réalisée par soudage (électrique, ultrason, induction,..), par collage ou par toute autre technique d'assemblage.

Ainsi, à partir du même procédé de fabrication, il est possible d'obtenir des éléments acoustiques en matériau composite adaptés par exemple pour une entrée d'air d'une nacelle, des éléments acoustiques en alliage d'aluminium adaptés par exemple pour une paroi interne de la nacelle, des éléments acoustiques en titane ou en Inconel® adaptés par exemple pour un conduit primaire d'éjection 24.

En variante, une paroi de fond peut être obtenue par moulage ou à partir d'une préforme plane mise en forme par matriçage, par thermoformage ou toute autre technique de mise en forme adaptée au matériau de la préforme.

La préforme peut comprendre des fentes de largeur nulle ou d'au moins 1 mm, pour conférer une certaine souplesse à la préforme afin de faciliter les étapes de mise en forme ou d'assemblage ou pour délimiter des languettes qui sont pliées ou recourbées de manière à former une paroi de fond (comme illustré sur la figure 7), une collerette (comme illustré sur la figure 11), une liaison entre les première et deuxième enceintes 42, 48 (comme illustré sur la figure 13) ou un bord périphérique 78 recourbé lorsque la préforme a une forme en cuvette 75 (comme illustré sur la figure 15). Lorsque la préforme est mise en forme, les fentes sont approximativement positionnées dans des plans contenant l'axe d'enroulement Ax et s'étendent à partir d'un bord courbe de la préforme. En présence de fentes, le procédé de fabrication comprend une étape de découpe des fentes dans la préforme à plat avant l'étape de mise en forme de ladite préforme.

Selon une autre caractéristique, la préforme comprend au moins un trou traversant, circulaire ou non, prévu au niveau d'une fente ou non, pour assurer une fonction de drainage ou une fonction acoustique. En présence d'au moins un trou, le procédé de fabrication comprend une étape d'obtention d'au moins un trou dans la préforme à plat avant l'étape de mise en forme de ladite préforme.

Selon l'invention, le procédé de fabrication d'une enceinte d'un élément acoustique d'une structure d'absorption acoustique permet d'obtenir des éléments acoustiques présentant des caractéristiques mécaniques satisfaisantes, même dans le cas d'un matériau composite, ainsi que des parois de faible épaisseur permettant de réduire la masse embarquée. Selon un autre avantage, le procédé de fabrication peut être utilisé pour différents matériaux si bien qu'il est possible de fabriquer des éléments acoustiques adaptés à différents environnements.

## Revendications

1. [Procédé de fabrication d'un élément acoustique d'une structure d'absorption acoustique comprenant au moins une enceinte (42, 48) présentant une forme cylindrique, conique ou tronconique, **caractérisé en ce que** le procédé comprend une étape de découpe d'au moins une préforme (62, 64, 64', 96, 108, 116) dans une plaque ou une feuille de matière, une étape de mise en forme de la préforme (62, 64, 64', 96, 108, 116) par roulage et une étape d'assemblage de deux bords latéraux (68.1, 72.1, 72.1', 68.2, 72.2, 72.2') de la préforme (62, 64, 64', 96, 108, 116) pour obtenir la forme cylindrique, conique ou tronconique de l'enceinte (42, 48).

2. Procédé de fabrication selon la revendication 1, **caractérisé en ce qu'**il comprend une étape de découpe d'au moins une série de fentes (84, 98, 110, 118) dans la préforme (64', 96, 108, 116) à plat, avant l'étape de mise en forme de ladite préforme (64', 96, 108, 116).

3. Procédé de fabrication selon la revendication 2, **caractérisé en ce que** les fentes (84, 98, 110, 118) sont approximativement positionnées dans des plans contenant l'axe d'enroulement (Ax) de la préforme (64', 96, 108, 116) lorsque ladite préforme (64', 96, 108, 116) est mise en forme et s'étendent à partir d'un bord courbe (74.2', 102, 114, 122) de la préforme (64', 96, 108, 116).

4. Procédé de fabrication selon la revendication 2 ou 3, **caractérisé en ce que** les fentes (84) s'étendent à partir d'un bord courbe (74.2') concave de la préforme (64') et délimitent des premières languettes (88) et **en ce que** le procédé de fabrication comprend une étape de pliage des premières languettes (88), après les étapes de mise en forme et d'assemblage de la préforme (64'), et une étape de jonction des premières languettes (88) de manière à obtenir une paroi de fond (60) pour l'enceinte (42, 48).

5. Procédé de fabrication selon l'une des revendications 2 à 4, **caractérisé en ce que** la préforme (108, 138) comprend une première série de premières fentes (110) qui s'étendent à partir d'un bord courbe (114) convexe de la préforme (108, 138).

6. Procédé de fabrication selon l'une des revendications 2 à 5, **caractérisé en ce que** la préforme (116, 138) comprend une deuxième série de deuxièmes fentes (84) qui s'étendent à partir d'un bord courbe (122) convexe de la préforme (116) de manière à délimiter des deuxièmes languettes (124) et **en ce que** le procédé de fabrication comprend une étape de découpe, de mise en forme et d'assemblage de la préforme (116) de manière à obtenir une première enceinte (42), une étape de positionnement de la première enceinte (42) dans une deuxième enceinte (48) comportant une deuxième paroi latérale (58) qui présente un premier bord (58.1) et une étape de pliage des deuxièmes languettes (124), autour du premier bord (58.1) de la deuxième paroi latérale (58) pour les plaquer contre une face extérieure de la deuxième paroi (58) de la deuxième enceinte (48) afin d'obtenir un assemblage des première et deuxième enceintes (42, 48).

7. Procédé de fabrication selon l'une des revendications 2 à 6, **caractérisé en ce qu'**il comprend une étape d'obtention d'au moins un trou (90, 104) dans la préforme (64', 96, 108, 116, 138) à plat, avant l'étape de mise en forme de ladite préforme (64', 96, 108, 116, 138).

8. Procédé de fabrication selon la revendication précédente, **caractérisé en ce que** les trous (90) sont réalisées au niveau des extrémités (86.2) des fentes (84) distantes d'un bord de la préforme (64').

9. Procédé de fabrication selon l'une des revendications précédentes, **caractérisé en ce qu'**il comprend une étape de découpe et de mise en forme d'une préforme de fond (66, 126), de manière à obtenir une forme en cuvette (75), et une étape d'assemblage de la préforme de fond (66, 126) avec la forme cylindrique ou tronconique de l'enceinte (42, 48) de manière à obtenir une enceinte (42, 88) avec une paroi de fond (57', 60).

10. Procédé de fabrication selon l'une des revendications précédentes, **caractérisé en ce que** la préforme (142) comprend des premier et deuxième bords latéraux (144, 146) qui présentent chacun plusieurs segments (144.1, 144.2, 146.1, 146.2) non alignés, configurés pour obtenir, après l'étape de mise en forme et d'assemblage, une paroi latérale (56, 58) comportant plusieurs formes tronconiques (140, 140') superposées.

11. Elément acoustique d'une structure d'absorption acoustique obtenu à partir du procédé de fabrication selon l'une des revendications précédentes, **caractérisé en ce qu'**il comprend une première enceinte (42) présentant au moins une première paroi latérale (56), qui s'étend entre des premier et deuxième bords (56.1, 56.2), obtenue à partir d'une première préforme (62, 108, 118, 138) découpée à plat, mise en forme et assemblée ainsi qu'une deuxième enceinte (48) présentant au moins une deuxième paroi latérale (58), qui s'étend entre des premier et deuxième bords (58.1, 58.2), obtenue à partir d'une deuxième préforme (64, 64') découpée, mise en forme et assemblée, les première et deuxième enceintes (42, 48) étant reliées au niveau des premiers bords (56.1, 58.1) des première et deuxième parois latérales (56, 58).

12. Elément acoustique d'une structure d'absorption acoustique selon la revendication précédente, **caractérisé en ce que** la deuxième enceinte (48) comprend une deuxième paroi de fond (60) formée par des languettes (88) de la deuxième préforme (64') pliées et reliées entre elles au niveau d'une zone de jonction (92).

13. Elément acoustique d'une structure d'absorption acoustique selon la revendication précédente, **caractérisé en ce que** les languettes (88) sont délimitées par des fentes (84) et pliées selon des lignes de pliage, les fentes (84) présentant des trous (90) positionnés au niveau des lignes de pliage des languettes (88).

14. Elément acoustique d'une structure d'absorption acoustique selon la revendication 11, **caractérisé en ce que** la deuxième enceinte (48) comprend une forme en cuvette (75) qui présente un fond (76) et un bord périphérique (78) recourbé et relié au deuxième bord (58.2) de la deuxième paroi latérale (58).

15. Elément acoustique d'une structure d'absorption acoustique selon la revendication précédente, **caractérisé en ce que** le bord périphérique (78) recourbé comprend plusieurs languettes (134) délimitées par des fentes (130) et pliées selon des lignes de pliage, les fentes (130) présentant des trous (136) positionnés au niveau des lignes de pliage des languettes (134).

16. Elément acoustique d'une structure d'absorption acoustique selon l'une des revendications 11 à 15, **caractérisé en ce que** les première et deuxième enceintes (42, 48) sont reliées par une zone de jonction de contact (80), continue ou discontinue sur le pourtour des première et deuxième enceintes (42, 48), qui jouxte les premiers bords (56.1, 58.1), qui s'étend sur toute la périphérie des premiers bords (56.1, 58.1) et sur une hauteur donnée.

17. Elément acoustique d'une structure d'absorption acoustique selon l'une des revendications 11 à 15, **caractérisé en ce que** la première enceinte (42) comprend une pluralité de languettes (124), au niveau du premier bord (56.1) de la première paroi latérale (56), repliées autour du premier bord (58.1) de la deuxième paroi latérale (58) pour obtenir une liaison entre les première et deuxième enceintes (42, 48).

18. Elément acoustique d'une structure d'absorption acoustique selon l'une des revendications 11 à 17, **caractérisé en ce que** la première paroi latérale (56) comprend des fentes (110) qui s'étendent à partir de son premier bord (56.1).

19. Elément acoustique d'une structure d'absorption acoustique selon les revendications 16 et 18, **caractérisé en ce que** les fentes (110) ont une longueur supérieure à la hauteur donnée de la zone de jonction de contact (80).

20. Elément acoustique d'une structure d'absorption acoustique selon l'une des revendications 11 à 19, **caractérisé en ce que** l'élément acoustique comprend une troisième enceinte (150), positionnée entre les première et deuxième enceintes (42, 48), qui comporte une paroi latérale (152) délimitée par un premier bord (152.1), relié à au moins l'une des première et deuxième enceintes (42, 48), ainsi que par un deuxième bord (152.2), opposé au premier bord (152.1), qui délimite un bord d'un orifice acoustique (154).

21. Structure d'absorption acoustique comprenant au moins un élément acoustique selon l'une des revendications 11 à 20.

22. Ensemble propulsif d'aéronef comprenant au moins une structure d'absorption acoustique selon la revendication 21.

## Patentansprüche

1. Verfahren zur Herstellung eines akustischen Elements einer akustischen Absorptionsstruktur, das wenigstens eine Kammer (42, 48) umfasst, die eine zylindrische, konische oder kegelstumpfförmige Form aufweist, **dadurch gekennzeichnet, dass** das Verfahren einen Schritt des Ausschneidens wenigstens einer Vorform (62, 64, 64', 96, 108, 116) aus einer Platte oder einer Materialfolie, einen Schritt der Formgebung der Vorform (62, 64, 64', 96, 108, 116) durch Rollen und einen Schritt des Zusammenfügens von zwei Seitenrändern (68.1, 72.1, 72.1', 68.2, 72.2, 72.2') der Vorform (62, 64, 64', 96, 108, 116), um die zylindrische, konische oder kegelstumpfförmige Form der Kammer (42, 48) zu erhalten, umfasst.

2. Herstellungsverfahren nach Anspruch 1, **dadurch gekennzeichnet, dass** es einen Schritt des Schneidens wenigstens einer Reihe von Schlitzen (84, 98, 110, 118) in der Vorform (64', 96, 108, 116) im flachen Zustand vor dem Schritt der Formgebung der Vorform (64', 96, 108, 116) umfasst.

3. Herstellungsverfahren nach Anspruch 2, **dadurch gekennzeichnet, dass** die Schlitze (84, 98, 110, 118) annähernd in Ebenen positioniert sind, welche die Aufrollachse (Ax) der Vorform (64', 96, 108, 116), wenn die Vorform (64', 96, 108, 116) geformt wird, enthalten, und sich von einem gekrümmten Rand (74.2', 102, 114, 122) der Vorform (64', 96, 108, 116) aus erstrecken.

4. Herstellungsverfahren nach Anspruch 2 oder 3, **dadurch gekennzeichnet, dass** sich die Schlitze (84) von einem konkaven gekrümmten Rand (74.2') der Vorform (64') aus erstrecken und erste Zungen (88) begrenzen, und dadurch, dass das Herstellungsverfahren einen Schritt des Biegens der ersten Zungen (88), nach den Schritten der Formgebung und des Zusammenfügens der Vorform (64'), und einen Schritt des Verbindens der ersten Zungen (88), um so eine Bodenwand (60) für die Kammer (42, 48) zu erhalten, umfasst.

5. Herstellungsverfahren nach einem der Ansprüche 2 bis 4, **dadurch gekennzeichnet, dass** die Vorform (108, 138) eine erste Reihe von ersten Schlitzen (110) umfasst, welche sich von einem konvexen gekrümmten Rand (114) der Vorform (108, 138) aus erstrecken.

6. Herstellungsverfahren nach einem der Ansprüche 2 bis 5, **dadurch gekennzeichnet, dass** die Vorform (116, 138) eine zweite Reihe von zweiten Schlitzen (84) umfasst, welche sich von einem konvexen gekrümmten Rand (122) der Vorform (116) aus so erstrecken, dass sie zweite Zungen (124) begrenzen, und dadurch, dass das Herstellungsverfahren einen Schritt des Ausschneidens, der Formgebung und des Zusammenfügens der Vorform (116), um so eine erste Kammer (42) zu erhalten, einen Schritt der Positionierung der ersten Kammer (42) in einer zweiten Kammer (48), die eine zweite Seitenwand (58) aufweist, welche einen ersten Rand (58.1) aufweist, und einen Schritt des Biegens der zweiten Zungen (124) um den ersten Rand (58.1) der zweiten Seitenwand (58) herum, um sie an eine Außenseite der zweiten Wand (58) der zweiten Kammer (48) anzudrücken, um einen Zusammenbau der ersten und der zweiten Kammer (42, 48) zu erreichen, umfasst.

7. Herstellungsverfahren nach einem der Ansprüche 2 bis 6, **dadurch gekennzeichnet, dass** es einen Schritt der Herstellung wenigstens eines Loches (90, 104) in der Vorform (64', 96, 108, 116, 138) im flachen Zustand vor dem Schritt der Formgebung der Vorform (64', 96, 108, 116, 138) umfasst.

8. Herstellungsverfahren nach dem vorhergehenden Anspruch, **dadurch gekennzeichnet, dass** die Löcher (90) an den von einem Rand der Vorform (64') entfernten Enden (86.2) der Schlitze (84) angebracht werden.

9. Herstellungsverfahren nach einem der vorhergehenden Ansprüche, **dadurch gekennzeichnet, dass** es einen Schritt des Zuschneidens und der Formgebung einer Bodenvorform (66, 126), um so eine Schalenform (75) zu erhalten, und einen Schritt des Zusammenfügens der Bodenvorform (66, 126) mit der zylindrischen oder kegelstumpfförmigen Form der Kammer (42, 48), um so eine Kammer (42, 88) mit einer Bodenwand (57', 60) zu erhalten, umfasst.

10. Herstellungsverfahren nach einem der vorhergehenden Ansprüche, **dadurch gekennzeichnet, dass** die Vorform (142) einen ersten und einen zweiten Seitenrand (144, 146) umfasst, welche jeweils mehrere nicht fluchtende Segmente (144.1, 144.2, 146.1, 146.2) aufweisen, die dafür ausgelegt sind, nach dem Schritt der Formgebung und des Zusammenfügens eine Seitenwand (56, 58) zu erhalten, die mehrere übereinander angeordnete kegelstumpfförmige Formen (140, 140') aufweist.

11. Akustisches Element einer akustischen Absorptionsstruktur, welches mithilfe des Herstellungsverfahrens nach einem der vorhergehenden Ansprüche erhalten wurde, **dadurch gekennzeichnet, dass** es eine erste Kammer (42) umfasst, die wenigstens eine erste Seitenwand (56) aufweist, welche sich zwischen einem ersten und einem zweiten Rand (56.1, 56.2) erstreckt, und die aus einer ersten Vorform (62, 108, 118, 138) erhalten wurde, die im flachen Zustand ausgeschnitten, geformt und zusammengefügt wurde, sowie eine zweite Kammer (48), die wenigstens eine zweite Seitenwand (58) aufweist, welche sich zwischen einem ersten und einem zweiten Rand (58.1, 58.2) erstreckt, und die aus einer zweiten Vorform (64, 64') erhalten wurde, die ausgeschnitten, geformt und zusammengefügt wurde, wobei die erste und die zweite Kammer (42, 48) an den ersten Rändern (56.1, 58.1) der ersten und der zweiten Seitenwand (56, 58) verbunden sind.

12. Akustisches Element einer akustischen Absorptionsstruktur nach dem vorhergehenden Anspruch, **dadurch gekennzeichnet, dass** die zweite Kammer (48) eine zweite Bodenwand (60) umfasst, die von Zungen (88) der zweiten Vorform (64') gebildet wird, die umgebogen und in einem Verbindungsbereich (92) miteinander verbunden wurden.

13. Akustisches Element einer akustischen Absorptionsstruktur nach dem vorhergehenden Anspruch, **dadurch gekennzeichnet, dass** die Zungen (88) von Schlitzen (84) begrenzt werden und entlang von Biegelinien umgebogen sind, wobei die Schlitze (84) Löcher (90) aufweisen, die an den Biegelinien der Zungen (88) positioniert sind.

14. Akustisches Element einer akustischen Absorptionsstruktur nach Anspruch 11, **dadurch gekennzeichnet, dass** die zweite Kammer (48) eine Schalenform (75) umfasst, welche einen Boden (76) und einen gekrümmten und mit dem zweiten Rand (58.2) der zweiten Seitenwand (58) verbundenen Umfangsrand (78) aufweist.

15. Akustisches Element einer akustischen Absorptionsstruktur nach dem vorhergehenden Anspruch, **dadurch gekennzeichnet, dass** der gekrümmte Umfangsrand (78) mehrere Zungen (134) umfasst, die von Schlitzen (130) begrenzt werden und entlang von Biegelinien umgebogen sind, wobei die Schlitze (130) Löcher (136) aufweisen, die an den Biegelinien der Zungen (134) positioniert sind.

16. Akustisches Element einer akustischen Absorptionsstruktur nach einem der Ansprüche 11 bis 15, **dadurch gekennzeichnet, dass** die erste und die zweite Kammer (42, 48) durch einen durchgehenden oder unterbrochenen Kontaktverbindungsbereich (80) auf dem Umfangsbereich der ersten und der zweiten Kammer (42, 48) verbunden sind, welcher an die ersten Ränder (56.1, 58.1) angrenzt und welcher sich über den gesamten Umfang der ersten Ränder (56.1, 58.1) und über eine gegebene Höhe erstreckt.

17. Akustisches Element einer akustischen Absorptionsstruktur nach einem der Ansprüche 11 bis 15, **dadurch gekennzeichnet, dass** die erste Kammer (42) mehrere Zungen (124) am ersten Rand (56.1) der ersten Seitenwand (56) umfasst, die um den ersten Rand (58.1) der zweiten Seitenwand (58) herum gebogen sind, um eine Verbindung zwischen der ersten und der zweiten Kammer (42, 48) zu erhalten.

18. Akustisches Element einer akustischen Absorptionsstruktur nach einem der Ansprüche 11 bis 17, **dadurch gekennzeichnet, dass** die erste Seitenwand (56) Schlitze (110) umfasst, welche sich von ihrem ersten Rand (56.1) aus erstrecken.

19. Akustisches Element einer akustischen Absorptionsstruktur nach einem der Ansprüche 16 bis 18, **dadurch gekennzeichnet, dass** die Schlitze (110) eine Länge aufweisen, die größer als die gegebene Höhe des Kontaktverbindungsbereichs (80) ist.

20. Akustisches Element einer akustischen Absorptionsstruktur nach einem der Ansprüche 11 bis 19, **dadurch gekennzeichnet, dass** das akustische Element eine zwischen der ersten und der zweiten Kammer (42, 48) positionierte dritte Kammer (150) umfasst, welche eine Seitenwand (152) aufweist, die von einem ersten Rand (152.1), der mit der ersten und/oder der zweiten Kammer (42, 48) verbunden ist, sowie von einem dem ersten Rand (152.1) gegenüberliegenden zweiten Rand (152.2), welcher einen Rand einer akustischen Öffnung (154) begrenzt, begrenzt wird.

21. Akustische Absorptionsstruktur, welche wenigstens ein akustisches Element nach einem der Ansprüche 11 bis 20 umfasst.

22. Antriebseinheit eines Luftfahrzeugs, welche eine akustische Absorptionsstruktur nach Anspruch 21 umfasst.

## Claims

1. Method for manufacturing an acoustic element of an acoustic absorption structure comprising at least one enclosure (42, 48) that is cylindrical, conical or frustoconical in shape, **characterized in that** the method comprises a step of cutting out at least one preform (62, 64, 64', 96, 108, 116) from a plate or sheet of material, a step of shaping the preform (62, 64, 64', 96, 108, 116) by rolling, and a step of assembling two lateral edges (68.1, 72.1, 72.1', 68.2, 72.2, 72.2') of the preform (62, 64, 64', 96, 108, 116) so as to obtain the cylindrical, conical or frustoconical shape of the enclosure (42, 48).

2. Manufacturing method according to Claim 1, **characterized in that** it comprises a step of cutting at least one set of slits (84, 98, 110, 118) in the preform (64', 96, 108, 116) while flat, before the step of shaping said preform (64', 96, 108, 116).

3. Manufacturing method according to Claim 2, **characterized in that** the slits (84, 98, 110, 118) are approximately positioned in planes containing the axis (Ax) of rolling of the preform (64', 96, 108, 116) when said preform (64', 96, 108, 116) is shaped, and extend from a curved edge (74.2', 102, 114, 122) of the preform (64', 96, 108, 116).

4. Manufacturing method according to Claim 2 or 3, **characterized in that** the slits (84) extend from a concave curved edge (74.2') of the preform (64') and delimit first tabs (88), and **in that** the manufacturing method comprises a step of folding the first tabs (88), after the steps of shaping and assembling the preform (64'), and a step of joining the first tabs (88) so as to obtain a bottom wall (60) for the enclosure (42, 28).

5. Manufacturing method according to one of Claims 2 to 4, **characterized in that** the preform (108, 138) comprises a first set of first slits (110) which extend from a convex curved edge (114) of the preform (108, 138).

6. Manufacturing method according to one of Claims 2 to 5, **characterized in that** the preform (116, 138) comprises a second set of second slits (84) which extend from a convex curved edge (122) of the preform (116) in such a way as to delimit second tabs (124), and **in that** the manufacturing method comprises a step of cutting, shaping and assembling the preform (116) so as to obtain a first enclosure (42), a step of positioning the first enclosure (42) in a second enclosure (48) comprising a second lateral wall (58) which has a first edge (58.1), and a step of folding the second tabs (124) around the first edge (58.1) of the second lateral wall (58) so as to press them against an outer face of the second wall (58) of the second enclosure (48) in order to obtain an assembly of the first and second enclosures (42, 48).

7. Manufacturing method according to one of Claims 2 to 6, **characterized in that** it comprises a step of obtaining at least one hole (90, 104) in the preform (64', 96, 108, 116, 138) while flat, before the step of shaping said preform (64', 96, 108, 116, 138).

8. Manufacturing method according to the preceding claim, **characterized in that** the holes (90) are made at the opposite ends (86.2) of the slits (84) from an edge of the preform (64').

9. Manufacturing method according to one of the preceding claims, **characterized in that** it comprises a step of cutting out and shaping a base preform (66, 126) so as to obtain a trough shape (75), and a step of assembling the base preform (66, 126) with the cylindrical or frustoconical shape of the enclosure (42, 48) so as to obtain an enclosure (42, 88) with a bottom wall (57', 60).

10. Manufacturing method according to one of the preceding claims, **characterized in that** the preform (142) comprises first and second lateral edges (144, 146) which each have multiple non-aligned segments (144.1, 144.2, 146.1, 146.2) that are configured to obtain, after the step of shaping and assembling, a lateral wall (56, 58) comprising multiple superposed frustoconical shapes (140, 140').

11. Acoustic element of an acoustic absorption structure obtained from the manufacturing method according to one of the preceding claims, **characterized in that** it comprises a first enclosure (42) having at least one first lateral wall (56), which extends between first and second edges (56.1, 56.2), obtained from a first preform (62, 108, 118, 138) cut out while flat, then shaped and assembled, and a second enclosure (48) having at least one second lateral wall (58), which extends between first and second edges (58.1, 58.2), obtained from a second preform (64, 64') cut out, then shaped and assembled, the first and second enclosures (42, 48) being connected at the first edges (56.1, 58.1) of the first and second lateral walls (56, 58).

12. Acoustic element of an acoustic absorption structure according to the preceding claim, **characterized in that** the second enclosure (48) comprises a second bottom wall (60) formed by tabs (88) of the second preform (64') that are folded and connected to one another at a joining region (92).

13. Acoustic element of an acoustic absorption structure according to the preceding claim, **characterized in that** the tabs (88) are delimited by slits (84) and are folded along folding lines, the slits (84) having holes (90) that are positioned at the lines for folding the tabs (88).

14. Acoustic element of an acoustic absorption structure according to Claim 11, **characterized in that** the second enclosure (48) comprises a trough shape (75) that has a bottom (76) and a peripheral edge (78) that is bent back and connected to the second edge (58.2) of the second lateral wall (58).

15. Acoustic element of an acoustic absorption structure according to the preceding claim, **characterized in that** the bent-back peripheral edge (78) comprises multiple tabs (134) that are delimited by slits (130) and are folded along folding lines, the slits (130) having holes (136) that are positioned at the lines for folding the tabs (134).

16. Acoustic element of an acoustic absorption structure according to one of Claims 11 to 15, **characterized in that** the first and second enclosures (42, 48) are connected by a contact joining region (80), that may be continuous or discontinuous, over the perimeter of the first and second enclosures (42, 48), which is continuous with the first edges (56.1, 58.1), which extends over the entire periphery of the first edges (56.1, 58.1) and over a given height.

17. Acoustic element of an acoustic absorption structure according to one of Claims 11 to 15, **characterized in that** the first enclosure (42) comprises a plurality of tabs (124), at the first edge (56.1) of the first lateral wall (56), these being folded back around the first edge (58.1) of the second lateral wall (58) so as to obtain a connection between the first and second enclosures (42, 48).

18. Acoustic element of an acoustic absorption structure according to one of Claims 11 to 17, **characterized in that** the first lateral wall (56) comprises slits (110) which extend from its first edge (56.1).

19. Acoustic element of an acoustic absorption structure according to Claims 16 and 18, **characterized in that** the length of the slits (110) is greater than the given height of the contact joining region (80).

20. Acoustic element of an acoustic absorption structure according to one of Claims 11 to 19, **characterized in that** the acoustic element comprises a third enclosure (150) that is positioned between the first and second enclosures (42, 48), that comprises a lateral wall (152) delimited by a first edge (152.1) which is connected to at least one of the first and second enclosures (42, 48), and by a second edge (152.2) which is opposite the first edge (152.1), which delimits an edge of an acoustic orifice (154).

21. Acoustic absorption structure comprising at least one acoustic element according to one of Claims 11 to 20.

22. Aircraft propulsion unit comprising at least one acoustic absorption structure according to Claim 21.
